# EUROPÄISCHE PATENTANMELDUNG

(11) **EP 1 178 295 A1**
(43) Veröffentlichungstag der Anmeldung: **06.02.2002**
(21) Anmeldenummer: 01114062.1
(22) Anmeldetag: 08.06.2001
(51) Int. Cl.: G01K 11/32, G01D 5/353

(54) **Verfahren und Vorrichtung zur Wellenlängendetektion**

(30) Priorität: 01.08.2000 DE 10037501
(71) Anmelder: MASCHINENFABRIK REINHAUSEN GmbH, 93059 Regensburg (DE)
(72) Erfinder: Helmig, Christian, Dipl.-Ing, 59457 Werl (DE); Teunissen, Jörg, Dipl.-Ing, 40885 Ratingen (DE)

(57) **Zusammenfassung**

Die Erfindung betrifft ein Verfahren und weiterhin eine Vorrichtung zur Wellenlängendetektion bei der Temperaturerfassung in einem elektrischen Betriebsmittel mittels einer Glasfaser, in die mindestens ein Bragg-Gitter eingeschrieben ist, das der zu erfassenden Temperatur ausgesetzt wird. Erfindungsgemäß erfolgt die Auswertung mittels eines weiteren Bragg-Gitters in einer weiteren Glasfaser, die mittels eines Optokopplers mit der ersten Glasfaser in Verbindung steht.

## Beschreibung

Die Erfindung betrifft ein Verfahren zur Wellenlängendetektion bei der Temperaturerfassung mittels einer Glasfaser mit mindestens einem eingeschriebenen Faser-Bragg-Gitter. Die Erfindung betrifft weiterhin eine für ein solches Verfahren besonders geeignete Vorrichtung.

Aus der Veröffentlichung Helmig, C.; Peier, D.: Alternative Technologien zur Messung wichtiger Betriebskenngrößen in Energienetzen, Elektrie, Berlin 53 (1999) A, Sonderausgabe 9/99, Seite 342 ff ist die Verwendung von faseroptischen Bragg-Gittem zur Temperaturmessung bekannt. Mit Faser-Bragg-Gitter wird dabei der Bereich periodisch angeordneter Schichten unterschiedlicher Brechzahlen in der Kernstruktur eines Monomode-Lichtwellenleiters bezeichnet. Dieser Bereich wird bei der Herstellung durch Belichtung der Faser mit hinreichend kurzwelligem UV-Licht über eine Belichtungsmaske erzeugt. Die Photoempfindlichkeit des aus GeO₂ - dotiertem Quarzglas bestehenden Faserkernes ermöglicht die Veränderung der effektiven Brechzahl n_{eff} des optischen Mediums an den streng periodisch angeordneten Belichtungsstellen im Abstand λ_{BG}. Dies ist in der Veröffentlichung Bludau, W.: Lichtwellenleiter in Sensorik und optischer Nachrichtentechnik, Springer Verlag Berlin Heidelberg New York, (VDI-Buch), 1998 ausführlich beschrieben. Durch die Veränderung der Kernstruktur der Glasfaser wird die Lichtausbreitung im Faserkern beeinflusst. Ein einfallendes breitbandiges Lichtspektrum erfährt durch die erzeugte Modulation der effektiven Brechzahl eine Streuung an der Struktur des Faser-Bragg-Gitters. Für eine bestimmte Wellenlänge des im Monomode-Lichtwellenleiter geführten Lichtes ist die reflektierte Lichtquelle wieder in Phase und überlagert sich. Faser-Bragg-Gitter wirken daher wie ein wellenlängenselektiver Spiegel.

Durch ihre charakteristische Geometrie weisen Faser-Bragg-Gitter also ein wellenlängenselektives Verhalten auf. Nur die jeweilige Bragg-Wellenlänge wird schmalbandig reflektiert. Da diese Eigenschaft sensitiv gegenüber äußeren Einflussgrößen, wie Temperatur bzw. Dehnung des Gitters, ist, können Faser-Bragg-Gitter für sensorische Anwendungen, insbesondere auch zur Temperaturerfassung, eingesetzt werden. Die Signalauswertung beschränkt sich dabei auf eine sehr exakte Wellenlängendetektion im pm...nm-Bereich. Die Bragg-Reflexionswellenlänge ist dabei direkt von der Glasfasertemperatur und damit der Temperatur in der Umgebung der Glasfaser, etwa in einem elektrischen Betriebsmittel, abhängig.

Es ist auch bereits vorgeschlagen worden, in einer Glasfaser mehrere, unabhängig voneinander wirkende Faser-Bragg-Gitter vorzusehen. Dies ist möglich, da auf Grund der geringen Verschiebung der Bragg-Reflexionswellenlänge bei Temperaturvariation im interessierenden Messbereich bei Verwendung einer breitbandigen Lichtquelle eine Identifizierung der verschiedenen Bragg-Gitter möglich ist. Somit können Bragg-Gitter an verschiedenen Positionen in eine Glasfaser eingeschrieben und damit an unterschiedlichen Stellen in einem elektrischen Betriebsmittel platziert werden. Die einzelnen Bragg-Gitter besitzen dabei jeweils eine unterschiedliche spezifische Bragg-Reflexionswellenlänge λ_{BG}, womit eine definierte Zuordnung einer ermittelten Temperatur zur jeweiligen Messstelle im elektrischen Betriebsmittel gewährleistet ist.

Die lineare Abhängigkeit der Reflexionswellenlänge von der Glasfasertemperatur kann durch Detektion der jeweils vorherrschenden Wellenlänge bei Temperaturvariation mit Hilfe eines kommerziellen optischen Spektrumanalysators, beispielsweise der Typen HP 71450B, 7125B, 71452B und 86140A des Herstellers Hewlett Packard oder eines Gerätes der Serie "WA" des "Burleigh" messtechnisch erfasst werden. Nachteilig für den Einsatz im Bereich der faseroptischen Temperaturmessung sind die mit dieser Wellenlängendetektionsmethode und den entsprechenden Geräten verbundenen hohen Investitionskosten für die Messgeräte und die damit im engen Zusammenhang stehende überdimensionierte Ausstattung der Geräte, die für die hier beschriebene wellenlängendetektion nicht erforderlich wäre.

Aus der DE-A 198 21 616 ist ferner bereits eine Anordnung zur Bestimmung von Temperatur und Dehnung einer optischer Faser bekannt, die aus einer breitbandigen Lichtquelle, einem Faserkoppler zum Einkoppeln des Lichts der Lichtquelle in eine optische Faser mit einem oder mit mehreren Faser-Bragg-Gittern und zum Auskoppeln des an den Faser-Bragg-Gittern reflektierten Lichtes in eine weitere Glasfaser, sowie einer Auswerteeinrichtung zur Auswertung des in diese zweite Glasfaser eingekoppelten optischen Signales besteht. Dabei besteht diese Auswerteeinrichtung, mit der die zweite Glasfaser in Verbindung steht, ihrerseits aus einer Interferometeranordnung, die über einen optischen Eingang, zwei optische Teiler zur Aufteilung des Lichts in zwei Lichtwege, Mittel zur Erzeugung zweier Interferometerarme mit unterschiedlicher optischer Weglänge sowie über mindestens einen Phasenmodulator an einem der Interferometerarme verfügt. Die Interferometeranordnung liefert damit zwei optische Ausgänge, die in einem nachgeschalteten Spektralanalysator als dort eingehende Lichtbündel jeweils einer Spektralzerlegung unterworfen werden und nachfolgend zu zwei separaten Empfängeranordnungen geführt sind. Auch diese bekannte Anordnung, die ebenfalls einen speziellen Spektralanalysator erfordert, ist teuer, aufwändig und für eine reine Wellenlängendetektion im Ergebnis der Temperaturerfassung mittels eines Bragg-Gitters eigentlich überdimensioniert.

Aufgabe der Erfindung ist es demnach, ein einfaches und kostengünstiges Verfahren der eingangs genannten Art zur Wellenlängendetektion anzugeben, das einfach aufgebaut ist, dennoch aber eine genaue Messung der Wellenlängenänderung bei Temperaturvariation und damit letztlich der jeweiligen Temperatur im elektrischen Betriebsmittel zulässt. Aufgabe der Erfindung ist es weiterhin, eine geeignete Vorrichtung zur Durchführung eines solchen Verfahrens anzugeben.

Diese Aufgaben werden durch ein Verfahren mit den Merkmalen des Patentanspruches 1 sowie eine geeignete Vorrichtung mit den Merkmalen des nebengeordneten Patentanspruches 4 gelöst. Die Unteransprüche betreffen jeweils besonders vorteilhafte Weiterbildungen des Verfahrens bzw. der Vorrichtung gemäß der Erfindung.

Der Erfindung liegt die allgemeine Idee zugrunde, dass zur Detektion der umgebungs-, hier temperaturabhängigen, Bragg-Wellenlänge die steile Kennlinie eines zweiten Bragg-Gitters mit einer leicht verschobenen Mittenwellenlänge eingesetzt wird.

Die Erfindung soll nachfolgend anhand von Zeichnungen beispielhaft noch näher erläutert werden. Es zeigen:
- Fig. 1: den schematischen Ablauf eines ersten erfindungsgemäßen Verfahrens
- Fig. 2: den schematischen Ablauf eines zweiten erfindungsgemäßen Verfahrens
- Fig. 3: den schematischen Aufbau einer ersten erfindungsgemäßen Vorrichtung
- Fig. 4: das Verhalten der Bragg-Gitter-Spektren bei Temperaturerhöhung
- Fig. 5: die resultierende Kennlinie der Intensität bei Temperaturvariation
- Fig. 6: die Linearität der Temperaturmessung bei Einsatz eines Wellenlängendetektors,
- Fig. 7: dabei die Figuren 4 bis 6 jeweils bezogen auf die Vorrichtung gemäß Figur 3, den schematischen Aufbau einer zweiten erfindungsgemäßen Vorrichtung.

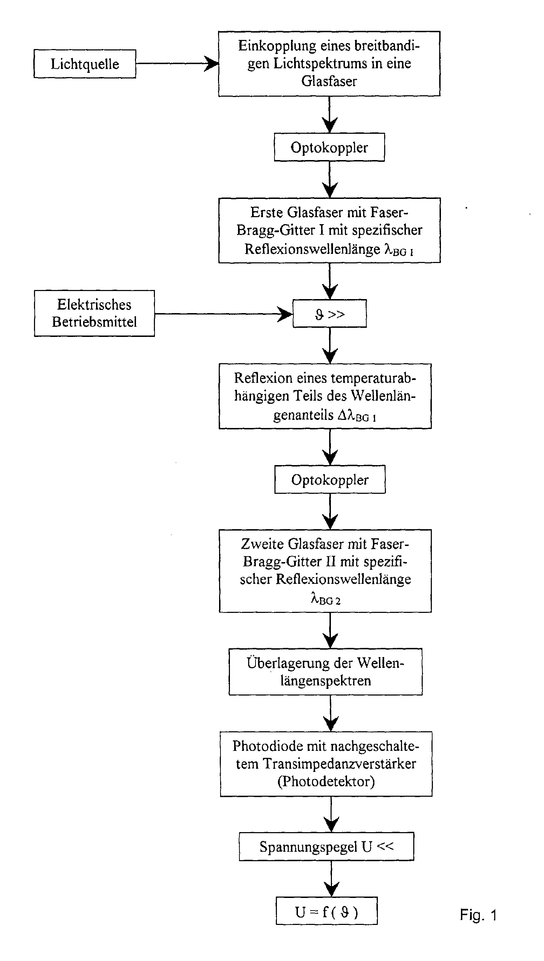

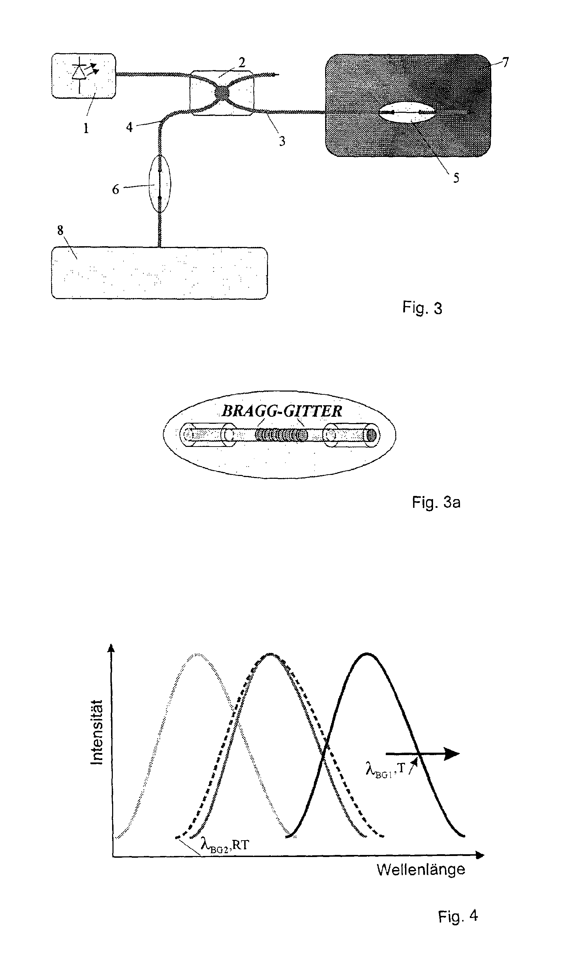

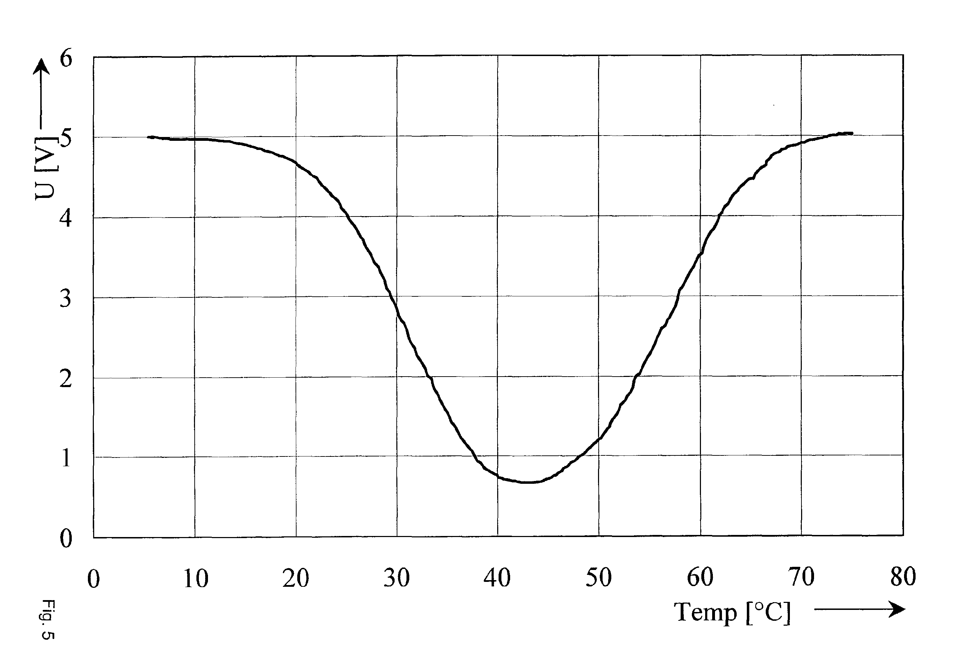

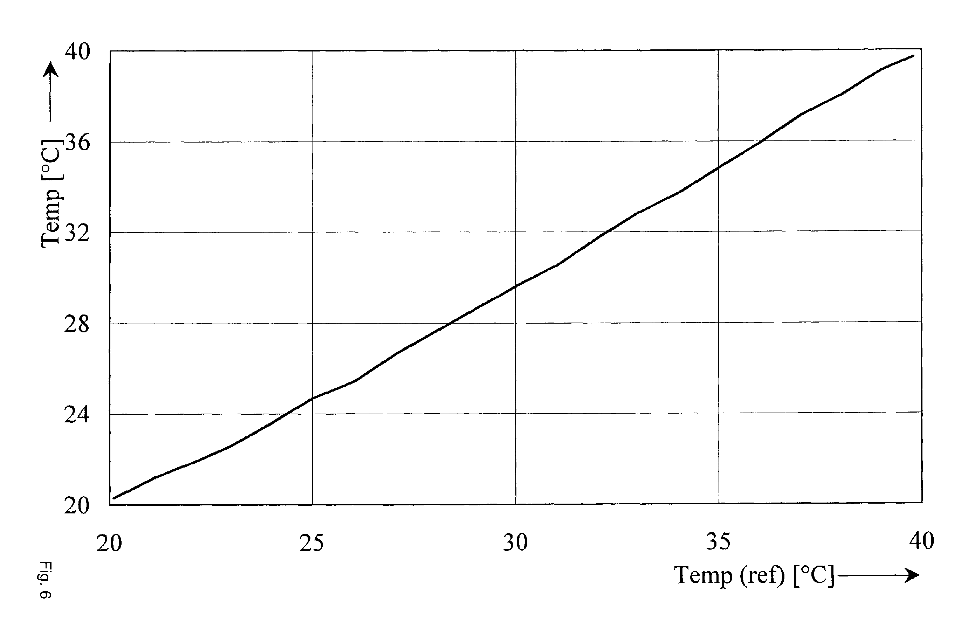

Zunächst soll an Hand der Figuren 1, 4, 5, und 6 der Ablauf eines ersten erfindungsgemäßen Verfahrens erläutert werden. Von einer Lichtquelle wird breitbandiges Licht in eine Glasfaser eingekoppelt; diese eingekoppelte Strahlung wird mittels eines Optokopplers in eine Glasfaser geführt, die mit einem ersten Bragg-Gitter I mit einer spezifischen Wellenlänge λ_{BG1} versehen ist. Die erste Glasfaser, in die das erste Bragg-Gitter I eingebracht ist, wird in einem elektrischen Betriebsmittel, beispielsweise in einem Transformator, in dem Bereich, in dem die Temperatur erfasst werden soll, untergebracht. Eine zweite Glasfaser mit einem eingeschriebenen Faser-Bragg-Gitter II und der entsprechenden spezifischen Wellenlänge λ_{BG2} befindet sich außerhalb dieses Betriebsmittels im Bereich der Auswerteeinrichtung. Wie bereits erläutert, besitzen die beiden Bragg-Gitter I und II unterschiedliche spezifische Bragg-Reflexionswellenlängen λ_{BG1} und λ_{BG2}, wobei beide Lichtwellenleiter mit dem jeweiligen Bragg-Gitter I und II über den Optokoppler verbunden sind. Bei Raumtemperatur (RT) beträgt die Differenz der Bragg-Wellenlängen nach einer besonders vorteilhaften Dimensionierung beispielsweise 0,15 nm, so dass sich die Kennlinien der jeweiligen Mittenwellenlänge gerade nicht überschneiden. Für die Signalauswertung bedeutet dies, dass das am ersten Bragg-Gitter I reflektierte Licht das zweite Bragg-Gitter II ungehindert passieren kann. Findet im elektrischen Betriebsmittel eine Temperaturerhöhung statt, etwa weil sich das Öl in einem Leistungstransformator erwärmt, so verschiebt sich das Spektrum am Bragg-Gitter I, das dieser Temperaturerhöhung im Betriebsmittel ausgesetzt ist, in Richtung des Spektrums des zweiten Bragg-Gitters II. Dies ist in Figur 4 dargestellt. Der temperaturabhängige reflektive Wellenlängenanteil des Bragg-Gitters I, λ_{BG1}, wird wird über den Optokoppler in die zweite Glasfaser eingekoppelt. Durch eine Photodiode mit nachgeschaltetem Transimpedanzverstärker wird die Lichtintensität in eine Spannung umgewandelt deren Pegel gemessen wird. Bei einer Überlagerung der beiden Wellenlängenspektren sinkt der am Photodetektor gemessene Spannungspegel, da ein Teil des reflektiven Wellenlängenspektrums von Bragg-Gitter I nun an Bragg-Gitter II reflektiert wird. Verdeutlicht wird dieser Effekt durch die in Figur 5 dargestellte Messkurve. Hierbei wird die Temperatur am Betriebsmittel und damit am Bragg-Gitter I von 5 Grad C auf 75 Grad C erhöht und gleichzeitig die Ausgangsspannung am Photodetektor, der aus einer (Photodiode mit nachgeschaltetem Transimpedanzverstärker), gemessen. Diese Ausgangsspannung ist proportional zur einfallenden Lichtintensität. Bei 43 Grad C besitzt die Messkurve ihr charakteristisches Minimum, da bei dieser Temperatur eine vollständige Überlappung der beiden Bragg-Gitter-Spektren stattfindet. Die in Figur 5 dargestellte Kennlinie zeigt auch das Problem der Mehrdeutigkeit, so dass bei Detektion der Ausgangsintensität des Lichtes die Temperatur nicht eindeutig zugeordnet werden kann. Daher ist es erforderlich, das Auswerteverfahren auf einen bestimmten Temperaturmessbereich zu beschränken, in dem dann eine sehr präzise Messung möglich ist. Dies ist in Figur 6 noch einmal dargestellt. Nach einer vorteilhaften Weiterbildung des Verfahrens können auch Schwellwerte detektiert werden. So ist die Messung von hot spots sehr einfach möglich, indem die Gitterspektren so zueinander dimensioniert werden, dass bei Überschreiten einer vorgegebenen kritischen Temperatur, z. B. in einem elektrischen Betriebsmittel der Ausgangsspannungspegel einen Referenzpegel unterschreitet und ein Alarmsignal erzeugt wird.

Figur 3 zeigt eine für ein solches Verfahren geeignete erste erfindungsgemäße Vorrichtung. Dabei ist eine breitbandige Lichtquelle 1 vorgesehen, mittels der eine breitbandige Strahlung über einen Optokoppler 2 in zwei Glasfasern 3, 4 eingekoppelt wird. Die Glasfaser 3 weist ein eingeschriebenes Bragg-Gitter 5 mit einer ersten charakteristischen Bragg-Wellenlänge λ_{BG1} auf und befindet sich im Inneren eines elektrischen Betriebsmittels 7, dessen Temperatur erfasst werden soll. Die zweite Glasfaser 4 weist ein weiteres eingeschriebenes Bragg-Gitters 6 mit einer zweiten charakteristischen Bragg-Wellenlänge λ_{BG2} auf. Das freie Ende der Glasfaser 4 steht mit einem Photodetektor 8 in Verbindung, der wiederum aus einer Photodiode und einem nachgeschalteten Transimpedanzverstärker besteht. In der Figur 3 sind die beiden Bragg-Gitter 5, 6 nur schematisch als Oval dargestellt; die Figur 3a zeigt eine ausschnittsweise Vergrößerung eines solchen Bragg-Gitters. Ein wesentlicher Vorteil dieser erfindungsgemäßen Vorrichtung besteht in der Möglichkeit, auch zeitlich schnelle Wellenlängenänderungen zu erfassen, d. h. schnelle Temperaturänderungen zu erkennen, während herkömmliche Messsysteme nach dem Stand der Technik lediglich im Bereich einiger Hz abtasten können. Hierdurch ergibt sich eine Vielzahl neuer sensorischer Anwendungsmöglichkeiten. Es wurde bereits weiter oben erläutert, dass bei entsprechender Wahl der Stellung der Bragg-Wellenlängen-Spektren zueinander im Ruhezustand eine Temperatur-Schwellwertdetektion zur Lokalisierung von hot spots möglich ist.

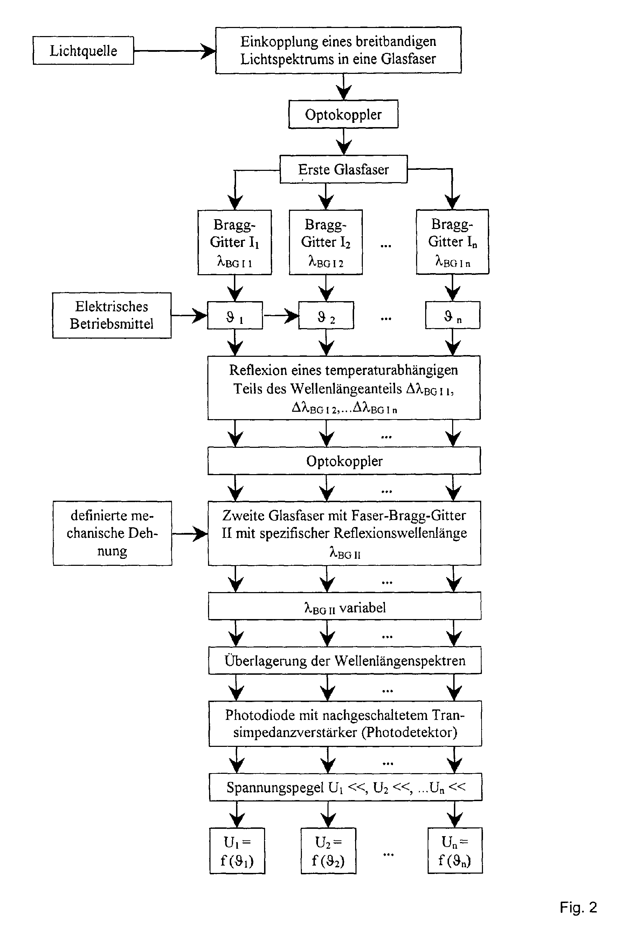

In Figur 2 ist ein weiteres erfindungsgemäßes Verfahren schematisch dargestellt. Bei diesem Verfahren sind, in Abwandlung des bereits erläuterten und in Figur 1 dargestellten ersten Verfahrens, in der ersten Glasfaser mehrere unterschiedliche Bragg-Gitter I₁, I₂..., Iₙ eingeschrieben, die die jeweils unterschiedliche charakteristische Reflexionswellenlängen aufweisen. Damit ist es möglich, mit einer einzigen ersten Glasfaser, die durch das elektrische Betriebsmittel geführt wird, an verschiedenen Stellen dieses Betriebsmittels separate Temperaturen zu erfassen. Das in der zweiten Glasfaser eingeschriebene Bragg-Gitter II kann nach einem Merkmal dieses Verfahrens definiert mechanisch gedehnt werden, wodurch sich seine spezifische Reflexionswellenlänge ändert. Das Bragg-Gitter II in der zweiten Glasfaser ist also durchstimmbar. Mittels eines solchen durchstimmbaren Bragg-Gitters II ist das Verfahren für die Signalauswertung der verschiedenen Bragg-Gitter I₁, I₂..., Iₙ geeignet. Das Bragg-Gitter II wird durch die beschriebene mechanische Dehnung nacheinander jeweils an eines der Bragg-Gitter in der ersten Glasfaser, deren entsprechende Temperatur aktuell erfasst werden soll, angepasst. Dieses Verfahren bietet damit die Möglichkeit einer Signalauswertung für einen quasi verteilten Temperatursensor mit anderen Worten: es kann durch dieses Verfahren ein Übergang von einer Schwellwertdetektion zu einer Online-Temperaturmessung an mehreren Punkten im Betriebsmittel stattfinden.

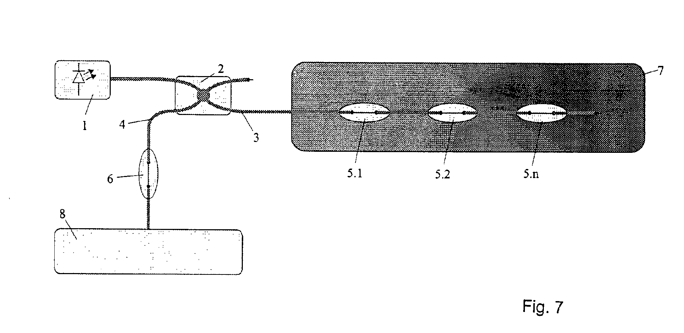

In Figur 7 schließlich ist eine entsprechende erfindungsgemäße Vorrichtung zur Durchführung des gerade beschriebenen zweiten erfindungsgemäßen Verfahrens im schematischen Aufbau gezeigt. Bei ansonsten unverändertem Aufbau ist zu sehen, dass in die Glasfaser 3, die in das zu überwachende elektrische Betriebsmittel 7 eingeführt ist, mehrere Bragg-Gitter 5.1, 5.2,...,5.n eingeschrieben sind, die jeweils unterschiedliche Reflexionswellenlängen aufweisen. Das in die Glasfaser 4 eingeschriebene Bragg-Gitter 6 ist durchstimmbar ausgebildet, d. h. kann von außen einer definierten mechanischen Dehnung unterworfen werden. Solche durchstimmbaren Bragg-Gitter sind bereits kommerziell verfügbar. Beispielweise beschreibt die Produktinformation "Fibre Bragg Gratings" der Firma Advanced Optics Solutions (AOS) GmbH, DE ein solches Gerät. Es wird hierbei nur ein einziges Bragg-Gitter 6 mit einem einzigen nachgeschalteten Photodetektor zur Signalauswertung benötigt, wodurch sich die Kosten im Gegensatz zu den Geräten zur Auswertung nach dem Stand der Technik ganz wesentlich reduzieren lassen.

Da die beschriebenen Auswerteverfahren lediglich auf einer Intensitätsübertragung in einem Signalpfad beruhen, würden sich möglicherweise Leistungsschwankungen der Lichtquelle 1 oder verlegebedingte Intensitätsschwankungen in den Glasfasern 3, 4 in Form einer Messsignalverfälschung niederschlagen. Zur Kompensation solcher Verfälschungen ist es möglich, am nicht verwendeten, freien Zweig des Optokopplers 2, wie er in den Figuren 3 und 7 dargestellt ist, eine zusätzliche Glasfaser anzukoppeln, die die Streckenführung des Sensorsignals, d. h. der verlegten Glasfaser 3, nachbildet. Das so übertragene zusätzliche Lichtsignal kann ebenfalls auf die beschriebene Weise in eine Spannung transformiert werden und zur Normierung des Verfahrens, d. h. der Ausgangsspannung des Photodetektors (8) als Maß für die Temperatur im Betriebsmittel, verwendet werden.

## Patentansprüche

1. Verfahren zur Wellenlängendetektion bei der Temperaturerfassung mittels einer Glasfaser,
wobei:
- in eine erste Glasfaser mit einem ersten Bragg-Gitter I mit spezifischer Wellenlänge λ_{BG1} breitbandiges Licht eingekoppelt wird,
- die erste Glasfaser optisch mittels eines Optokopplers mit einer zweiten Glasfaser gekoppelt wird,
- die erste Glasfaser mit dem ersten Bragg-Gitter I in einen Bereich, dessen Temperatur erfasst werden soll, eingeführt wird,
- bei Temperaturerhöhung im Bereich, dessen Temperatur erfasst werden soll, sich die spezifische Wellenlänge λ_{BG1} des ersten Bragg-Gitters I verschiebt,
- der am ersten Bragg-Gitter I temperaturabhängig reflektierte Wellenlängenanteil des in die erste Glasfaser eingekoppelten Lichtes in die zweite Glasfaser geführt, d. h. eingekoppelt wird,
- das in die zweite Glasfaser eingekoppelte Licht in einer Auswerteeinheit derart ausgewertet wird, dass das Ausgangssignal der Auswerteeinheit ein Maß für die Temperatur des Bereiches ist, dessen Temperatur bestimmt werden soll,
**dadurch gekennzeichnet,**
**dass** in der zweiten Glasfaser ein weiteres, zweites Bragg-Gitter II mit spezifischer Wellenlänge λ_{BG2} vorgesehen wird, wobei λ_{BG2} unterschiedlich von λ_{BG1} ist,
**dass** der in die zweite Glasfaser eingekoppelte Wellenlängenanteil des ersten Bragg-Gitters I am zweiten Bragg-Gitter II abhängig von der Temperatur des Bereiches, in dem sich das erste Bragg-Gitter I befindet, reflektiert wird
und **dass** der verbleibende, nicht reflektierte Wellenlängenanteil in der zweiten Glasfaser einem Photodetektor zugeführt wird, dessen Ausgangsspannung sich abhängig von der Lichtintensität verringert und damit ein Maß für die Temperatur ist.

2. Verfahren nach Anspruch 1,
wobei die erste Glasfaser mehrere Bragg-Gitter I₁, I₂..., Iₙ aufweist, die an unterschiedlichen Stellen im elektrischen Betriebsmittel positioniert werden
und wobei die spezifische Wellenlänge λ_{BG2} des zweiten Bragg-Gitters II durch definierte mechanische Dehnung im Mikrometerbereich verändert wird.

3. Verfahren nach Anspruch 1 oder 2,
wobei die spezifischen Wellenlängen aller Bragg-Gitter so zueinander dimensioniert werden, dass bei Überschreiten einer vorgegebenen kritischen Temperatur im elektrischen Betriebsmittel der Ausgangsspannungspegel am Photodetektor einen Grenzwert unterschreitet und ein Alarmsignal generiert wird.

4. Vorrichtung zur Wellenlängendetektion bei der Temperaturerfassung mittels einer Glasfaser,
wobei eine breitbandige Lichtquelle vorgesehen ist, mittels der in eine erste Glasfaser eine Strahlung einkoppelbar ist,
wobei die erste Glasfaser ein eingeschriebenes Bragg-Gitter mit einer ersten charakteristischen Bragg-Wellenlänge λ_{BG1} aufweist,
wobei ein Optokoppler vorgesehen ist, der eine optische Kopplung zwischen der ersten Glasfaser und einer zweiten Glasfaser herstellt,
wobei die erste Glasfaser mit dem ersten Bragg-Gitter im Bereich, dessen Temperatur erfasst werden soll, angeordnet ist
und wobei die zweite Glasfaser mit einer Auswerteeinheit in Verbindung steht, deren Ausgangssignal ein Maß für die gemessene Temperatur ist,
**dadurch gekennzeichnet,**
**dass** in die zweite Glasfaser (4) ein weiteres, zweites Bragg-Gitter (6) mit spezifischer Wellenlänge λ_{BG2} eingeschrieben ist, wobei λ_{BG2} unterschiedlich von λ_{BG1} ist
und **dass** die Auswerteeinheit einen dem zweiten Bragg-Gitter (6) nachgeordneten Photodetektor (8) aufweist, derart, dass der nicht am zweiten Bragg-Gitter (6) reflektierte Teil des in die zweite Glasfaser (4) eingekoppelten Lichtes vom Photodetektor (8) in das elektrische Ausgangssignal umwandelbar ist.

5. Vorrichtung gemäß Patentanspruch 4,
wobei die erste Glasfaser (3) mehrere eingeschriebene Bragg-Gitter (5.1, 5.2,...5.n) aufweist, die jeweils unterschiedliche Reflexionswellenlängen besitzen
und wobei das in die zweite Glasfaser (4) eingeschriebene Bragg-Gitter (6) durchstimmbar ist, derart, dass seine Reflexionswellenlänge (λ_{BG2}) variierbar ist.

6. Vorrichtung gemäß Patentanspruch 4 oder 5,
wobei der Photodetektor (8) aus einer Photodiode und einem nachgeschalteten Transimpedanzverstärker besteht.

7. Vorrichtung gemäß Patentanspruch 5 oder 6,
wobei das in die zweite Glasfaser (4) eingeschriebene Bragg-Gitter mit Mitteln zu seiner definierten mechanischen Dehnung versehen ist.

8. Vorrichtung gemäß Patentanspruch 4 oder 5 oder 6 oder 7,
wobei am nicht verwendeten Zweig des Optokopplers (2) eine zusätzliche Glasfaser angekoppelt ist, deren Lichtsignal ebenfalls in eine Spannung umgewandelt und zur Normierung des Ausgangssignals des Photodetektors (8) verwendet wird.
